# EUROPÄISCHE PATENTSCHRIFT

(11) **EP 2 345 571 B1**
(45) Veröffentlichungstag und Bekanntmachung des Hinweises auf die Patenterteilung: **28.11.2012**
(21) Anmeldenummer: 11150785.1
(22) Anmeldetag: 13.01.2011
(51) Int. Cl.: B62D 15/02

(54) **Verfahren zur Unterstützung eines Fahrers eines Kraftfahrzeugs**
Method to support a driver of a motor vehicle
Procédé destiné à assister un conducteur de véhicule automobile

(30) Priorität: 18.01.2010 DE 102010000965
(43) Veröffentlichungstag der Anmeldung: 20.07.2011
(73) Patentinhaber: Robert Bosch GmbH, 70442 Stuttgart (DE)
(72) Erfinder: Niemz, Volker, 71277, Rutesheim (DE)

(56) Entgegenhaltungen:
- EP-A2- 1 862 376
- WO-A1-2007/012516
- WO-A1-2009/081519
- DE-A1-102005 037 468
- FR-A1- 2 895 348
- US-A1- 2001 026 317

## Beschreibung

### Stand der Technik

Die Erfindung betrifft ein Verfahren zur Unterstützung eines Fahrers eines Kraftfahrzeugs bei einem Rangiermanöver, insbesondere bei einem Einparkvorgang in eine Parklücke, bei dem die Umgebung des Kraftfahrzeugs erfasst wird und abgeschätzt wird, ob eine geeignete Parklücke vorliegt und eine Bahn berechnet wird, entlang der das Kraftfahrzeug in die Parklücke einparken kann.

Zur Durchführung des Verfahrens zur Unterstützung eines Fahrers eines Kraftfahrzeugs bei einem Rangiermanöver, insbesondere bei einem Einparkvorgang in eine Parklücke, werden sogenannte Einparkassistenzsysteme eingesetzt. Diese Einparkassistenzsysteme umfassen im Allgemeinen Abstandssensoren, die üblicherweise in den Stoßfängern des Kraftfahrzeugs positioniert sind. Mit den Abstandssensoren wird der Abstand zu Objekten in der Umgebung des Kraftfahrzeugs erfasst. Gleichzeitig kann mit Hilfe der Abstandssensoren auch ein Abbild der Umgebung erstellt werden, um festzustellen, ob eine geeignete Parklücke vorliegt. Wenn eine geeignete Parklücke gefunden wird, lässt sich eine geeignete Einparkbahn, auch als Trajektorie bezeichnet, in die Parklücke berechnen. Zur Unterstützung des Fahrers beim Einparkvorgang werden diesem anschließend Lenkanweisungen gegeben, um das Fahrzeug entlang der Trajektorie in die Parklücke einzuparken.

Neben Systemen, bei denen dem Fahrer Lenkanweisungen gegeben werden, ist es weiterhin auch bekannt, dass die Lenkführung vom Einparkassistenzsystem übernommen wird. Hierzu ist zum Beispiel ein geeigneter Stellmotor mit der Lenkung verbunden, so dass durch Ansteuerung des Stellmotors die Lenkbewegungen übernommen werden können. Ferner existieren auch vollautomatische Systeme, bei denen neben der Lenkführung auch die Längsführung des Kraftfahrzeugs, d.h. Beschleunigen, Abbremsen und Halten der Geschwindigkeit, vom Fahrassistenzsystem übernommen wird. Dem Fahrer fallen in diesem Fall nur noch überwachende Aufgaben zu.

Der nächstliegende Stand der Technik ist in der EP 1 862 376 A2 zu sehen und zeigt ein Verfahren zur Unterstützung eines Fahrers eines Kraftfahrzeugs bei einem Rangiermanöver, folgende Schritte umfassend: (a) Erfassen der Umgebung des Kraftfahrzeugs und Abschätzen, ob eine geeignete Parklücke vorliegt, (b) Berechnen einer Bahn, entlang der das Kraftfahrzeug in die Parklücke einparken kann, ausgehend von der aktuellen Position des Kraftfahrzeugs, (c) Anbieten einer Trajektorie, bei der das Fahrzeug im ersten Fahrzug rückwärts fährt, und einer weiteren Trajektorie, bei der das Fahrzeug im ersten Fahrzeug vorwärts fährt.

Um zu vermeiden, dass das Kraftfahrzeug während des Einparkens mit Objekten kollidiert, wird während des gesamten Einparkvorgangs die Umgebung mit Hilfe der Abstandssensoren überwacht. Der Abstand zu Objekten kann auf diese Weise kontinuierlich erfasst werden. Sollte der Abstand zu einem Objekt einen vorgegebenen Mindestabstand unterschreiten, wird bei einem vollautomatischen System das Kraftfahrzeug angehalten. Bei einem semiautomatischen System, bei dem die Längsführung dem Fahrer obliegt, werden Warnhinweise, beispielsweise durch optische Anzeige oder durch akustische Anzeige, gegeben.

Nachteil der bekannten Systeme, die den Fahrer beim Einparken eines Kraftfahrzeugs unterstützen, ist, dass das Kraftfahrzeug zunächst zu einem vorgegebenen Startpunkt geführt werden muss. Hierzu erhält der Fahrer zu Beginn der automatisierten Führung in die Parklücke eine genaue Anweisung, was zu tun ist, um den Einparkvorgang zu starten. Sollte sich jedoch zum Beispiel ein Hindernis in der zunächst vom Fahrer zurückzulegenden Strecke befinden, lässt sich die vom Einparkassistenzsystem gewünschte Aktion nicht durchführen. Somit kann das gesamte, vom Einparkassistenzsystem berechnete Einparkmanöver nicht durchgeführt werden.

### Offenbarung der Erfindung

### Vorteile der Erfindung

Ein erfindungsgemäßes Verfahren zur Unterstützung eines Fahrers eines Kraftfahrzeugs bei einem Rangiermanöver, insbesondere bei einem Einparkvorgang in eine Parklücke, umfasst folgende Schritte:
(a) Erfassen der Umgebung des Kraftfahrzeugs und Abschätzen, ob eine geeignete Parklücke vorliegt,
(b) Berechnen einer Bahn, entlang der das Kraftfahrzeug in die Parklücke einparken kann, ausgehend von der aktuellen Position des Kraftfahrzeugs,
(c) Anzeigen des ersten zu fahrenden Rangierzuges in Abhängigkeit einer vom Fahrer vorgegebenen Richtung für den ersten Rangierzug.

Dadurch, dass die Bahn, entlang der das Kraftfahrzeug in die Parklücke einparken kann, ausgehend von der aktuellen Position des Kraftfahrzeugs berechnet wird und zudem der erste zu fahrende Rangierzug in Abhängigkeit einer vom Fahrer vorgegebenen Richtung für den ersten Rangierzug angezeigt wird, kann der Fahrer Einfluss nehmen auf die zum Einparken erforderliche Bahnplanung. Insbesondere wird das Kraftfahrzeug von der aktuellen Position aus in die Parklücke geleitet. Es ist nicht erforderlich, zunächst eine vom System fest vorgegebene Startposition anzufahren. Ein weiterer Vorteil ist, dass aufgrund der vorgegebenen Richtung des ersten Rangierzuges durch den Fahrer der Einparkvorgang auch dann durchgeführt werden kann, wenn in der Umgebung des Kraftfahrzeuges Hindernisse existieren, da aufgrund der vorgegebenen Richtung eine Kollision mit den Hindernissen vermieden werden kann.

Durch die Vorgabe der Richtung, in die der erste Fahrzug ausgeführt werden soll, lässt sich die Funktionalität und die Robustheit des Einparkassistenzsystems, mit dessen Hilfe das Verfahren durchgeführt wird, verbessern.

Ein weiterer Vorteil ist, dass für eine komplexe Bahnplanung, wie sie für das Einparken in Parklücken erforderlich ist, kein Wissen über die angrenzende Umgebung für das Fahrassistenzsystem erforderlich ist, da die Richtung des ersten Fahrzuges vom Fahrer vorgegeben wird. Dies hat den Vorteil, dass Sensoren und Systemausprägungen eingespart werden können. Ein weiterer Vorteil ist, dass durch die Vorgabe der Fahrtrichtung des ersten Zuges durch den Fahrer der Fahrer in das eigentliche Bahnregelsystem integriert wird, was zu einer Erhöhung der Akzeptanz des Fahrassistenzsystems führen kann.

Um die Bahnplanung zum Einparken in eine Parklücke abhängig von der vom Fahrer vorgegebenen Richtung zu machen, wird bei einer Änderung der vom Fahrer vorgegebenen Richtung für den ersten Rangierzug eine erneute Bahnplanung durchgeführt und der erste zu fahrende Rangierzug mit der geänderten Richtung wird dem Fahrer angezeigt. Dies ist insbesondere dann sinnvoll, wenn zum Beispiel aufgrund eines bewegten Objektes, beispielsweise eines weiteren Fahrzeuges oder eines Fußgängers die ursprünglich vorgesehene Richtung für den ersten Fahrzug vom Fahrer nicht mehr eingehalten werden kann.

Die vom Fahrer des Kraftfahrzeugs vorgegebene Richtung des ersten zu fahrenden Rangierzuges wird üblicherweise ein Vorwärtszug oder ein Rückwärtszug sein. Das bedeutet, dass in Abhängigkeit von der Vorgabe durch den Fahrer das Rangiermanöver, beispielsweise das Einparken in eine Parklücke, entweder mit einem Vorwärtszug oder mit einem Rückwärtszug beginnt. Insbesondere beim Auftauchen bewegter Objekte, beispielsweise von Fußgängern, Radfahrern oder weiteren Kraftfahrzeugen ist die Richtungsvorgabe durch den Fahrer sinnvoll, da dieser die durch das aufgetauchte bewegliche Objekt geänderte Situation besser beurteilen kann als ein Fahrassistenzsystem.

Die Vorgabe der Richtung des ersten zu fahrenden Rangierzuges vom Fahrer des Kraftfahrzeugs kann zum Beispiel durch Einlegen eines Vorwärtsganges oder eines Rückwärtsganges erfolgen. Die Vorgabe durch Einlegen eines Vorwärtsganges oder eines Rückwärtsganges ist sowohl bei einem mechanischen Schaltgetriebe, einem halbautomatischen Schaltgetriebe oder einem Automatikgetriebe möglich. Neben der Vorgabe der Richtung durch Einlegen eines entsprechenden Ganges ist es alternativ auch möglich, dass die Richtung zum Beispiel durch Betätigen eines Tasters oder eines Schalters erfolgt. Hierbei ist jede beliebige Taste oder Schalter denkbar. Neben einem separaten Schalter ist auch der Einsatz eines Multifunktionsschalters zur Vorgabe der Richtung für den ersten Fahrzug möglich. In diesem Fall ist jedoch zunächst vorzuwählen, welche Funktion der Multifunktionsschalter ausüben soll und erst danach lässt sich die Richtung des entsprechenden Fahrzuges wählen.

In einer Ausführungsform der Erfindung werden dem Fahrer alle für das Rangiermanöver notwendigen Bahnen in Abhängigkeit von der gewählten Richtung für den ersten Fahrzug angezeigt. Dies hat den Vorteil, dass der Fahrer bereits vor dem Ausführen des Rangiermanövers die Anzahl der notwendigen Züge mitgeteilt bekommt und so den Aufwand für das durchzuführende Rangiermanöver abschätzen kann. Zudem ist es möglich, dass der Fahrer zunächst die erste Richtung für den ersten Fahrzug vorgibt, und anschließend die zweite Richtung für den durchzuführenden ersten Fahrzug, wobei jeweils alle notwendigen Züge für das Rangiermanöver dargestellt werden. Auf diese Weise kann der Fahrer auch den unterschiedlichen Aufwand abschätzen, abhängig von der Richtung des ersten Fahrzuges. So kann es durchaus möglich sein, dass bei einem Vorwärtszug als erstem Fahrzug eine andere Anzahl an Zügen zum Erreichen der Zielposition benötigt wird als bei einem Rückwärtszug als erstem Fahrzug.

In einer weiteren Ausführungsform der Erfindung werden die zum Einparken in die Parklücke notwendigen Bahnen sowohl für ein Einparkmanöver mit einem Vorwärtszug als erstem Zug als auch mit einem Rückwärtsfahrzug als erstem Zug berechnet, unabhängig davon, welche Richtung der Fahrer zunächst wählt. Dies hat den Vorteil, dass bei einem Wechsel der Fahrtrichtung für den ersten Fahrzug durch den Fahrer nicht eine erneute Bahnplanung durchgeführt werden muss, die zunächst Zeit benötigt, sondern dass zu Beginn des Rangiermanövers bereits für beide Optionen die jeweils notwendigen Bahnen berechnet worden sind.

Ein weiterer Vorteil, die Bahnen sowohl für ein Einparkmanöver mit einem Vorwärtszug als erstem Zug als auch mit einem Rückwärtszug als erstem Zug zu berechnen, ist, dass die Bahnen für beide Fahrmanöver gleichzeitig dargestellt werden können. Durch die gleichzeitige Darstellung der notwendigen Bahnen für das Einparkmanöver mit einem Vorwärtszug als erstem Zug und einem Rückwärtszug als erstem Zug kann der Fahrer so auf einen Blick abschätzen, welches Rangiermanöver das günstigere ist, insbesondere in dem Fall, wenn beide Richtungen für den ersten Fahrzug möglich sind.

In einer bevorzugten Ausführungsform werden dem Fahrer das Kraftfahrzeug und bei der Erfassung der Umgebung detektierte Objekte dargestellt. Die Darstellung erfolgt dabei vorteilhafterweise in einer zweidimensionalen Darstellung als Draufsicht. Auf diese Weise erhält der Fahrer bereits einen Überblick über die vom System detektierten Objekte in der Umgebung des Kraftfahrzeugs und kann so abschätzen, ob alle Objekte vom System detektiert worden sind. Ein weiterer Vorteil einer zweidimensionalen Darstellung in Draufsicht ist, dass dem Fahrer bereits alle Fahrzüge angezeigt werden können und dieser so einen Überblick über das durchzuführende Rangiermanöver erhält.

In einer alternativen Ausführungsform ist es auch möglich, dass dem Fahrer jeweils nur der nächstfolgende durchzuführende Fahrzug, zum Beispiel in Form eines Piktogramms, angezeigt wird. Hierbei ist es insbesondere vorteilhaft, wenn der nächste durchzuführende Fahrzug, insbesondere der erste Fahrzug, dem Fahrer sowohl hinsichtlich der Länge der zurückzulegenden Strecke als auch gegebenenfalls erforderliche Abbiegerichtungen angezeigt werden. Die Anzeige gegebenenfalls erforderlicher Abbiegerichtungen kann zum Beispiel durch entsprechende Pfeile erfolgen. Die Streckenlänge entweder durch die Länge des Pfeils oder alternativ durch einen unterschiedlich langen Balken. Weiterhin ist es auch möglich, wenn der Fahrer den Zug bereits durchführt, dass die Länge des Balkens während der Durchführung des Fahrzuges entsprechend der bereits zurückgelegten Streckenlänge abnimmt.

Bei einer zweidimensionalen Draufsicht ist es zum Beispiel möglich, jeweils die aktuelle Position des Kraftfahrzeugs bei einem Fahrzug in Relation zur detektierten Umgebung darzustellen.

Um den Fahrer zusätzlich beim Einparken zu unterstützen ist es selbstverständlich vorteilhaft, wenn während des gesamten Rangiermanövers die Umgebung des Kraftfahrzeugs erfasst wird. Die hierzu einzusetzenden Abstandssensoren sind vorteilhafterweise die gleichen Abstandssensoren, die auch zur Erfassung der Umgebung des Kraftfahrzeugs in Schritt (a) verwendet werden. Als Abstandssensoren zur Erfassung der Umgebung des Kraftfahrzeuges eignen sich zum Beispiel Ultraschallsensoren, kapazitive Sensoren, Radarsensoren, Infrarotsensoren, LIDAR-Sensoren oder auch videobasierte Sensoren.

Der Einsatz der entsprechenden Sensoren zur Bestimmung des Abstandes des Kraftfahrzeugs zu einem Objekt ist dem Fachmann bekannt.

### Kurze Beschreibung der Figuren

Ausführungsbeispiele der Erfindungen sind in den Figuren dargestellt und werden in der nachfolgenden Beschreibung näher erläutert. Es zeigen:
- Figur 1: eine Umgebungskarte in Draufsicht mit einem Vorwärtszug als erstem Fahrzug,
- Figur 2: eine Umgebungskarte in Draufsicht mit einem Rückwärtszug als erstem Fahrzug
- Figuren 3.1, 3.2: Pictogrammdarstellung für einen ersten Vorwärtszug für eine kurze zurückzulegende Strecke und für eine lange zurückzulegende Strecke in einer ersten Ausführungsform
- Figuren 4.1, 4.2: Pictogrammdarstellung für einen Vorwärtszug für eine kurze zurückzulegende Strecke und für eine lange zurückzulegende Strecke in einer zweiten Ausführungsform
- Figur 5: eine Umgebungskarte in Draufsicht mit Bahnplanungen mit einem Vorwärtszug als erstem Fahrzug und einem Rückwärtszug als erstem Fahrzug

### Ausführungsformen der Erfindung

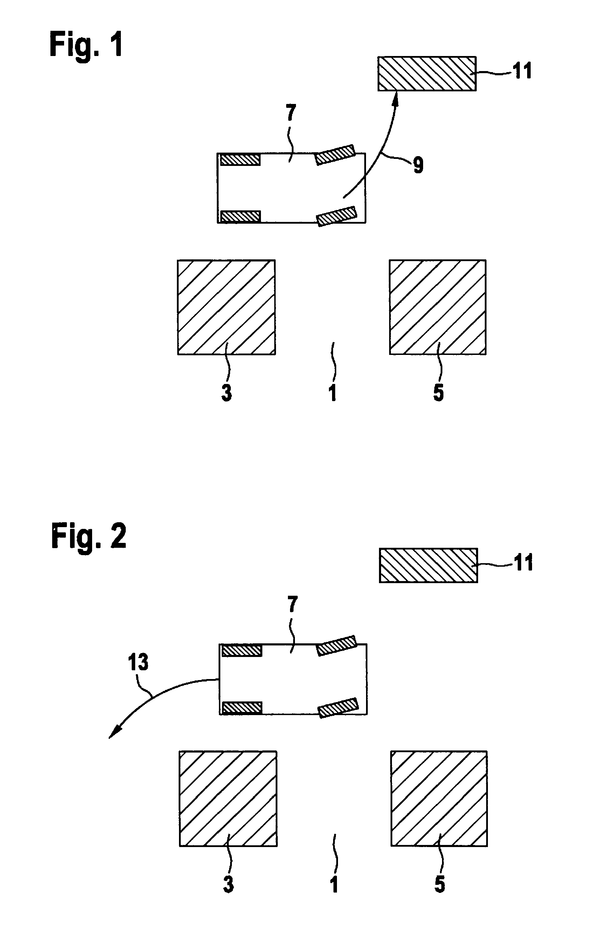

In Figur 1 ist eine Umgebungskarte in Draufsicht mit einem Vorwärtszug als erstem Fahrzug dargestellt.

In Figur 1 ist eine Querparklücke 1 dargestellt, die auf einer Seite von einem ersten Objekt 3 und auf der anderen Seite von einem zweiten Objekt 5 begrenzt ist. Das erste Objekt 3 und das zweite Objekt 5 sind zum Beispiel Fahrzeuge, die auf der Querparklücke eines der benachbarten Parkplätze stehen. Alternativ ist es auch möglich, dass das erste Objekt 3 und das zweite Objekt 5 zum Beispiel seitliche Begrenzungen einer Garage, beispielsweise Mauern, sind. Auch können die Objekte 3, 5 beliebige andere Hindernisse, die die Querparklücke 1 begrenzen, sein.

Die Querparklücke 1 wurde von einem Fahrer eines Kraftfahrzeugs 7 oder einem Fahrassistenzsystem des Kraftfahrzeugs 7 als geeignete Parklücke zum Parken des Kraftfahrzeugs 7 detektiert. Um das Kraftfahrzeug 7 in die Querparklücke 1 rückwärts einzuparken, wird üblicherweise zunächst ein Vorwärtsfahrzug durchgeführt, um das Kraftfahrzeug 7 in eine geeignete Ausgangsposition zu bringen und anschließend ein Rückwärtsfahrzug in die Querparklücke 1.

Die für das Einparken in die Querparklücke 1 notwendigen Fahrzüge werden zur Unterstützung des Fahrers zum Beispiel von einem Fahrassistenzsystem berechnet. Anschließend gibt das Fahrassistenzsystem dem Fahrer Hinweise zu notwendigen Lenkbewegungen, die dieser durchführen muss, um entlang der vom Fahrassistenzsystem berechneten Bahnen in die Querparklücke 1 einzuparken.

Der Einparkvorgang, den das Fahrassistenzsystem berechnet, beginnt üblicherweise zunächst mit einem ersten Fahrzug mit dem das Kraftfahrzeug 7 in eine geeignete Ausgangsposition gebracht wird. Der erste Fahrzug, um das Kraftfahrzeug 7 in eine geeignete Ausgangsposition zu bringen, ist in Figur 1 mit einem Pfeil 9 dargestellt. In der hier dargestellten Ausführungsform ist der erste Fahrzug 9 ein Vorwärtszug.

In der in Figur 1 dargestellten Ausführungsform lässt sich der erste Fahrzug 9 jedoch nicht durchführen, da ein Hindernis 11 auf der für den ersten Fahrzug 9 zu durchfahrenden Bahn steht. Das Hindernis 11 kann ein beliebiges Hindernis sein. So kann das Hindernis 11 zum Beispiel eine parkendes Fahrzeug, ein Blumenkübel oder eine Pflanze oder auch eine Mauer sein oder aber ein bewegtes Objekt, beispielsweise ein sich bewegendes Fahrzeug, ein Fahrradfahrer oder ein Fußgänger. Auch ein beliebiges anderes Hindernis ist möglich.

Wenn sich das Hindernis 11 nicht im Erfassungsbereich der Abstandssensoren des Kraftfahrzeuges 7 befindet, wird das Hindernis 11 nicht detektiert und kann somit bei der Bahnplanung des Fahrassistenzsystems nicht berücksichtigt werden. Der Fahrer des Kraftfahrzeugs 7 wird das Hindernis 11 jedoch wahrnehmen und erkennen, dass der vom Fahrassistenzsystem berechnete erste Fahrzug 9 nicht durchführbar ist, ohne mit dem Hindernis 11 zu kollidieren. Das vom Fahrassistenzsystem berechnete Einparkmanöver in die Querparklücke 1 lässt sich somit nicht durchführen. Es wäre eine geänderte Berechnung für das Einparkmanöver in die Querparklücke 1 notwendig. Solange das Fahrassistenzsystem das Hindernis 11 jedoch nicht erkennt, wird eine solche geänderte Bahnplanung nicht erfolgen. Da die Bahnplanung jedoch so berechnet ist, dass der erste Fahrzug 9 vollständig ausgeführt werden muss, um das Kraftfahrzeug 7 in die Querparklücke 1 einparken zu können, führt das durch Fahren des ersten Fahrzuges 9 bis zum Erreichen des Hindernisses 11 dazu, dass sich das Kraftfahrzeug in einer ungünstigen Position für das weitere Einparkmanöver befindet.

Um dem Fahrer die Möglichkeit einer Kontrolle der geplanten Bahnen zu geben, ist es weiterhin vorteilhaft, wenn eine Umfeldkarte im Sichtbereich des Fahrers dargestellt wird. Dies ist zum Beispiel mit einem geeigneten Bildschirm, beispielsweise einem Bildschirm eines Navigationsgerätes möglich. Die Umgebungskarte kann zum Beispiel wie in Figur 1 dargestellt aussehen. Bei einer vom Fahrassistenzsystem erstellten Umgebungskarte werden jedoch nur die Objekte dargestellt, die auch von den Sensoren des Kraftfahrzeugs 7 erfasst worden sind. Bei der Darstellung der Situation gemäß Figur 1 wird somit das Hindernis 11 nicht für den Fahrer dargestellt. Auf der Anzeigevorrichtung für den Fahrer sind lediglich die Objekte 3 und 5 zu erkennen. Dies ermöglicht es dem Fahrer zu sehen, dass das Hindernis 11 von den Abstandssensoren des Kraftfahrzeugs 7 nicht erfasst worden ist und somit die Bahnplanung erfolgt ist, ohne das Hindernis 11 zu berücksichtigen. Der Fahrer kann somit entscheiden, das vom Fahrsystem geplante Manöver nicht durchführen zu lassen.

In Figur 2 ist eine Umgebungskarte mit Draufsicht mit einem Rückwärtszug als erstem Fahrzug dargestellt.

Im Unterschied zu der in Figur 1 dargestellten Situation ist in Figur 2 ein erster Rückwärtszug 13 dargestellt. Aufgrund des Hindernisses 11 lässt sich, wie zuvor beschrieben, das Einparkmanöver mit einem Vorwärtszug als erstem Fahrzug 9 nicht durchführen. Erfindungsgemäß hat nun der Fahrer des Kraftfahrzeugs 7 die Möglichkeit, die Richtung des ersten Fahrzuges vorzuwählen. Aufgrund des Hindernisses 11 wird der Fahrer dem Fahrassistenzsystem vorgeben, den ersten Fahrzug für das Fahrmanöver in die Querparklücke 1 als Rückwärtszug 13 vorzusehen. Ein entsprechender Rückwärtszug 13 ist in Figur 2 eingezeichnet. Da im Bereich des Rückwärtszuges 13 kein Hindernis zu erkennen ist, kann dieses Fahrmanöver problemlos ausgeführt werden und das Einparken in die Querparklücke 1 kann dann entsprechend einer geänderten Bahnplanung erfolgen, bei der der erste Fahrzug der Rückwärtszug 13 ist.

Die Vorgabe durch den Fahrer, als ersten Fahrzug einen Rückwärtszug 13 durchzuführen, kann zum Beispiel durch Einlegen des entsprechenden Rückwärtsgangs erfolgen. Alternativ ist es auch möglich, dass die Wahl des Fahrers, zuerst einen Rückwärtszug 13 auszuführen, zum Beispiel durch Betätigen eines entsprechenden Tasters oder Schalters oder auch durch Eingabe über einen Multifunktionsschalter eines Bordcomputers erfolgt. Bevorzugt ist jedoch die Auswahl des Fahrers durch Einlegen des entsprechenden Ganges, d.h. bei einem gewünschten Rückwärtszug 13 als erstem Fahrzug durch Einlegen des Rückwärtsganges.

Bevorzugt ist es, dass vor der Durchführung des Einparkvorganges dem Fahrer zunächst der erste Fahrzug 9 bei eingelegtem Vorwärtsgang und der Rückwärtszug 13 bei eingelegtem Rückwärtsgang dargestellt werden. Anhand der Darstellung kann der Fahrer des Kraftfahrzeugs 7 dann entscheiden, welches Manöver er als erstes ausführen möchte.

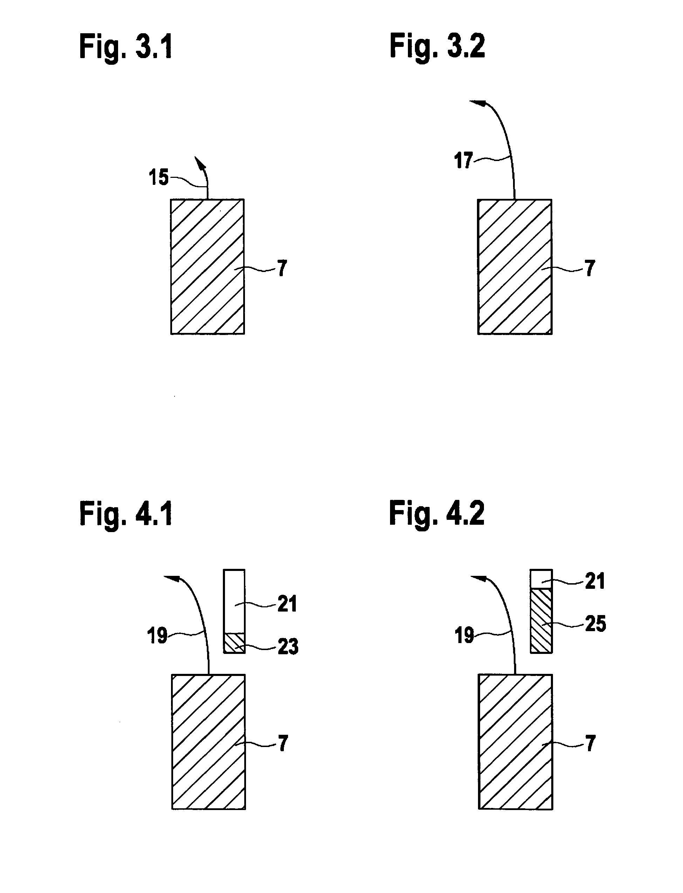

In den Figuren 3.1 und 3.2 sind Fahrzüge in Form eines Piktogramms für einen Vorwärtszug dargestellt.

Figur 3.1 zeigt ein Piktogramm für einen Vorwärtszug mit kurzer Strecke. In Figur 3.2 ist ein Piktogramm für einen Vorwärtszug mit einer langen Strecke dargestellt.

Durch die Anzeige der zurückzulegenden Streckenlänge, beispielsweise durch einen kurzen Pfeil, wie er in Figur 3.1 dargestellt ist, oder wenn es eine längere Strecke ist, durch einen langen Pfeil, wie er in Figur 3.2 dargestellt ist, kann der Fahrer abschätzen, wie weit das Kraftfahrzeug 7 im Rahmen des ersten Fahrzuges bewegt wird. Wenn sich somit ein Objekt vor dem Kraftfahrzeug 7 befindet, kann der Fahrer anhand der vorgesehenen Länge des ersten Fahrzuges, der dem Fahrer angezeigt wird, abschätzen, ob der Abstand bis zum Hindernis ausreichend ist, um den ersten Fahrzug durchzuführen oder ob die vorgesehene Strecke für den ersten Fahrzug länger ist als der Abstand bis zum Hindernis. Weiterhin wird durch den Pfeil auch die zurückzulegende Richtung, hier beispielhaft ein Abbiegen nach links dargestellt. Dies erlaubt dem Fahrer eine weitere Abschätzung, ob ein Hindernis im vorgesehenen Fahrweg liegt oder nicht und der vorgesehene Fahrzug somit durchgeführt werden kann oder nicht.

In der Pictogrammdarstellung ist jeweils das Kraftfahrzeug 7 schematisch gezeigt und ausgehend vom Kraftfahrzeug 7 die zurückzulegende Strecke durch einen kurzen Pfeil 15 für eine kurze zurückzulegende Strecke oder durch einen langen Pfeil 17 für eine lange zurückzulegende Strecke. Weiterhin ist es auch möglich, dass die Länge des Pfeils in Abhängigkeit von der Streckenlänge variiert. So sind zum Beispiel nicht nur zwei Längendarstellungen möglich, sondern eine beliebige Anzahl an Streckenlängen zwischen einer minimalen Länge und einer maximalen Länge.

Alternativ zu der in den Figuren 3.1 und 3.2 dargestellten Ausführungsform ist es auch möglich, die Pictogrammdarstellung so zu wählen, dass einerseits das Kraftfahrzeug 7 dargestellt wird, die Strecke mit der Richtungsänderung durch einen Pfeil 19 und die Länge der Strecke durch einen Balken 21. Auch in der in den Figuren 4.1 und 4.2 dargestellten Darstellung erfolgt ein Abbiegen nach links, wie es mit dem Pfeil 19 dargestellt ist.

Die Länge der zurückzulegenden Strecke wird durch den Balken 21 dargestellt. Bei einem kurzen Balken 23 ist zum Beispiel eine kurze Strecke zurückzulegen und bei einem langen Balken 25 eine lange Strecke.

In einer Ausführungsform der Erfindung ist es weiterhin möglich, dass die Länge des Pfeils 15, 17 bzw. die Länge des Balkens 23 bzw. 25 während des Fahrens entlang der geplanten Bahn entsprechend der zurückgelegten Strecke abnimmt, bis der Pfeil 15 bzw. der Balken 23 verschwunden ist. Dies bedeutet, dass der Zielpunkt der Bahn erreicht ist und der Fahrer das Kraftfahrzeug 7 anhalten muss. Dies ist insbesondere dann hilfreich, wenn die Längsführung des Kraftfahrzeugs 7 durch den Fahrer durchgeführt wird. Bei einer automatischen Längsführung des Kraftfahrzeugs 7 dient die Darstellung eines sich verändernden Balkens bzw. einer sich verändernden Länge des Pfeils 15 lediglich zur Überwachung des Zuges durch den Fahrer.

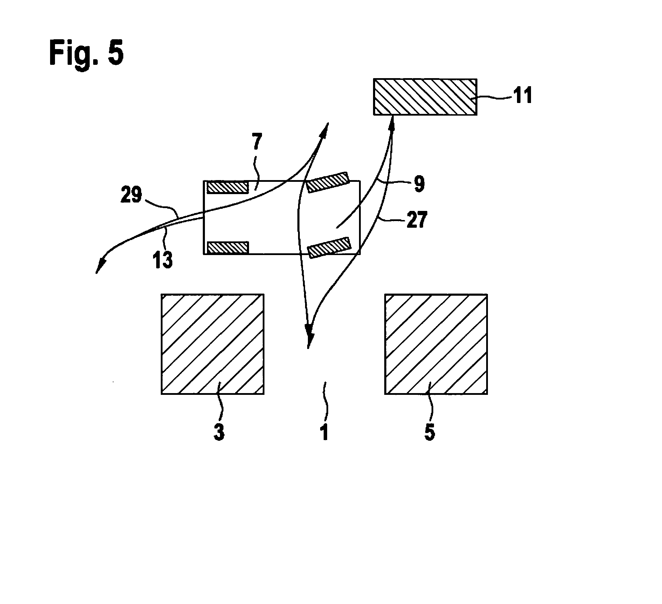

In Figur 5 ist beispielhaft eine Umgebungskarte in Draufsicht mit Bahnplanungen mit einem Vorwärtszug als erstem Fahrzug und mit einem Rückwärtszug als erstem Fahrzug dargestellt.

Um dem Fahrer eine weitere Entscheidungshilfe zu geben, ob ein Rangiermanöver beispielsweise ein Einparken in die Querparklücke 1 mit einem Vorwärtsparkzug beginnend oder mit einem Rückwärtsparkzug beginnend durchgeführt werden soll, ist es weiterhin möglich, dass vom Fahrassistenzsystem zunächst die Bahnen sowohl für das Manöver mit einem Vorwärtszug als erstem Fahrzug als auch mit einem Rückwärtszug als erstem Fahrzug berechnet werden. Diese Manöver können dann beispielhaft, wie in Figur 5 dargestellt, auf einer geeigneten Anzeigevorrichtung gezeigt werden. Als Anzeigevorrichtung eignet sich hier ebenso, wie bereits in den Figuren 1 und 2 beschrieben, beispielsweise ein Bildschirm eines Bordcomputers im Sichtfeld des Fahrers oder alternativ zum Beispiel auch ein Bildschirm eines Navigationssystems. Anhand der gezeigten Bahnen kann der Fahrer dann abschätzen, welches Rangiermanöver er durchführen möchte.

Alternativ ist es auch möglich, dass jeweils in Abhängigkeit von der gewählten Richtung für den ersten Fahrzug sämtliche Fahrzüge für das Rangiermanöver beginnend mit einem Vorwärtszug oder beginnend mit einem Rückwärtszug dargestellt werden. In diesem Fall erfolgt die Darstellung jeweils separat und der Fahrer kann sich beispielsweise durch Gangwechsel zunächst die unterschiedlichen Bahnplanungen anzeigen lassen und dann entscheiden.

Aus Figur 5 ist ersichtlich, dass bei einem Vorwärtszug als erstem Fahrzug 9 ein Einparken in zwei Zügen in die Querparklücke 1 möglich ist. Demgegenüber werden bei einem Rückwärtszug 13 als erstem Fahrzug drei Fahrzüge benötigt. Das Ausführen des Manövers mit einem Vorwärtszug als erstem Fahrzug 9 ist jedoch nur dann möglich, wenn der erste Fahrzug 9 auch ausgeführt werden kann. Dies ist in der dargestellten Ausführungsform aufgrund des Hindernisses 11 jedoch nicht möglich.

Da das Hindernis 11 jedoch vom Fahrassistenzsystem des Fahrzeugs 7 nicht erfasst wird, sondern nur der Fahrer das Hindernis 11 sieht, muss die Entscheidung, welches Rangiermanöver in die Parklücke 1 durchgeführt wird, vom Fahrer getroffen werden. Ob das Fahrassistenzsystem das Hindernis 11 wahrnimmt oder nicht, lässt sich für den Fahrer zum Beispiel anhand der Darstellung auf der Anzeige des Bordcomputers oder alternativ dem Bildschirm des Navigationssystems erkennen. Weiterhin kann der Fahrer dann immer noch abschätzen, ob die Strecke bis zum Hindernis 11 ausreichend ist, um den ersten Fahrzug 9 durchzuführen oder nicht.

Um dem Fahrer eine klare Anzeige zu geben für die Bahnplanung 27 mit einem Vorwärtszug als erstem Zug oder die Bahnplanung 29 mit einem Rückwärtszug als erstem Zug ist es zum Beispiel möglich, in der Darstellung die Bahnplanung 27 mit einem Vorwärtszug als erstem Zug und die Bahnplanung 29 mit einem Rückwärtszug als erstem Zug in unterschiedlichen Farben darzustellen. Alternativ ist es zum Beispiel auch möglich, unterschiedliche Strichlierungen zu verwenden. So kann zum Beispiel eine Bahnplanung mit durchgezogener Linie und eine Bahnplanung in gestrichelter Linie dargestellt werden. Wenn mehr als zwei Bahnplanungen möglich sind, können auch noch weitere Punktierungen oder ähnliches verwendet werden. Bei mehr als zwei Bahnplanungen ist es für den Fahrer notwendig, neben dem Einlegen des Ganges eine weitere Auswahl zu treffen. Dies kann z. B. über einen Schalter, einen berührungsempfindlichen Bildschirm oder einen Multifunktionssignalgeber z. B. einen Multifunktionstaster erfolgen. Üblicherweise werden vom Fahrassistenzsystem jedoch nur zwei Bahnplanungen vorgegeben, eine mit einem Vorwärtszug als erstem Zug und eine mit einem Rückwärtszug als erstem Zug.

Durch die Anzeige des ersten Zuges 9 als Vorwärtszug bzw. des ersten Rückwärtszuges 13 als erstem Fahrzug wird für die jeweilige Bahnplanung der aktuelle Standpunkt des Kraftfahrzeugs 7 als Ausgangspunkt verwendet. Es ist nicht notwendig, zunächst ein Fahrmanöver, welches nicht dargestellt wird, zu einem für die weitere Bahnplanung berechneten Ausgangspunkt zu berücksichtigen. Neben der Anwendung für ein Einparkmanöver in eine Querparklücke wie es in den Figuren 1, 2 und 5 dargestellt ist, eignet sich das erfindungsgemäße Verfahren auch für einen Einparkvorgang in eine Längsparklücke. Auch das Durchführen eines beliebigen anderen Rangiermanövers, z. B. das Wenden in einer engen Umgebung, kann durch das erfindungsgemäße Verfahren unterstützt werden.

## Patentansprüche

1. Verfahren zur Unterstützung eines Fahrers eines Kraftfahrzeugs (7) bei einem Rangiermanöver, insbesondere bei einem Einparkvorgang in eine Parklücke (1), folgende Schritte umfassend:
(a) Erfassen der Umgebung des Kraftfahrzeugs (7) und Abschätzen, ob eine geeignete Parklücke (1) vorliegt,
(b) Berechnen einer Bahn (9; 13; 27; 29), entlang der das Kraftfahrzeug (7) in die Parklücke (1) einparken kann, ausgehend von der aktuellen Position des Kraftfahrzeugs (7),
**gekennzeichnet durch** den Folgenden Schritt:
(c) Anzeigen des ersten zu fahrenden Rangierzuges (9; 13) in Abhängigkeit einer vom Fahrer vorgegebenen Richtung für den ersten Rangierzug.

2. Verfahren gemäß Anspruch 1, **dadurch gekennzeichnet, dass** bei einer Änderung der vom Fahrer vorgegebenen Richtung für den ersten Rangierzug (9; 13) eine erneute Bahnplanung erfolgt und der erste zu fahrende Rangierzug (9; 13) mit der geänderten Richtung dem Fahrer angezeigt wird.

3. Verfahren gemäß Anspruch 1 oder 2, **dadurch gekennzeichnet, dass** die vom Fahrer des Kraftfahrzeugs (7) vorgegebene Richtung des ersten zu fahrenden Rangierzuges ein Vorwärtszug (9) oder ein Rückwärtszug (13) ist.

4. Verfahren gemäß einem der Ansprüche 1 bis 3, **dadurch gekennzeichnet, dass** die Richtung des ersten zu fahrenden Rangierzuges (9; 13) vom Fahrer des Kraftfahrzeugs (7) durch Einlegen eines Vorwärtsganges oder eines Rückwärtsganges vorgegeben wird.

5. Verfahren gemäß einem der Ansprüche 1 bis 4, **dadurch gekennzeichnet, dass** dem Fahrer alle für das Rangiermanöver notwendigen Bahnen (27; 29) in Abhängigkeit von der gewählten Richtung für den ersten Fahrzug (9; 13) angezeigt werden.

6. Verfahren gemäß einem der Ansprüche 1 bis 5, **dadurch gekennzeichnet, dass** die zum Einparken in die Parklücke (1) notwendigen Bahnen (27; 29) sowohl für ein Einparkmanöver mit einem Vorwärtszug (9) als erstem Zug als auch mit einem Rückwärtszug (13) als erstem Zug berechnet werden.

7. Verfahren gemäß Anspruch 6, **dadurch gekennzeichnet, dass** dem Fahrer des Kraftfahrzeugs die Bahnen (27; 29) für das Einparkmanöver mit einem Vorwärtszug (9) als erstem Zug und mit einem Rückwärtszug (13) als erstem Zug angezeigt werden.

8. Verfahren gemäß einem der Ansprüche 1 bis 7, **dadurch gekennzeichnet, dass** dem Fahrer das Kraftfahrzeug (7) und bei der Erfassung der Umgebung detektierte Objekte (3, 5) dargestellt werden.

9. Verfahren gemäß einem der Ansprüche 1 bis 8, **dadurch gekennzeichnet, dass** der erste Fahrzug dem Fahrer sowohl hinsichtlich Länge der zurückzulegenden Strecke als auch gegebenenfalls erforderlicher Abbiegerichtungen angezeigt wird.

## Claims

1. Method for assisting a driver of a motor vehicle (7) during a manoeuvre, in particular during a process of parking in a parking space (1), comprising the following steps:
(a) sensing the surroundings of the motor vehicle (7) and estimating whether there is a suitable parking space (1),
(b) calculating a path (9; 13; 27; 29) along which the motor vehicle (7) can park in the parking space (1), starting from the current position of the motor vehicle (7), **characterized by** the following step:
(c) displaying the first manoeuvring movement (9; 13) to be carried out as a function of a direction which is predefined by the driver for the first manoeuvring movement.

2. Method according to Claim 1, **characterized in that** when the direction which is predefined by the driver for the first manoeuvring movement (9; 13) changes, renewed path planning takes place and the first manoeuvring movement (9; 13) to be carried out with the changed direction is displayed to the driver.

3. Method according to Claim 1 or 2, **characterized in that** the direction which is predefined by the driver of the motor vehicle (7) for the first manoeuvring movement which is to be carried out is a forward movement (9) or a rearward movement (13).

4. Method according to one of Claims 1 to 3, **characterized in that** the direction of the first manoeuvring movement (9; 13) to be carried out is predefined by the driver of the motor vehicle (7) by engaging a forward gear speed or a reverse gear speed.

5. Method according to one of Claims 1 to 4, **characterized in that** all the paths (27; 29) which are necessary for the manoeuvring movement are displayed to the driver as a function of the selected direction for the first movement (9; 13).

6. Method according to one of Claims 1 to 5, **characterized in that** the paths (27; 29) which are necessary for parking in the parking space (1) are calculated both for a parking manoeuvre with a forward movement (9) as a first movement and with a rearward movement (13) as a first movement.

7. Method according to Claim 6, **characterized in that** the paths (27; 29) for the parking manoeuvre are displayed to the driver of the motor vehicle, with a forward movement (9) as a first movement and with a rearward movement (13) as a first movement.

8. Method according to one of Claims 1 to 7, **characterized in that** the motor vehicle (7) and objects (3, 5) detected during the sensing of the surroundings are displayed to the driver.

9. Method according to one of Claims 1 to 8, **characterized in that** the first movement is displayed to the driver both in terms of the length of the distance to be travelled and, if appropriate as a function of necessary turning directions.

## Revendications

1. Procédé d'assistance au conducteur d'un véhicule automobile (7) dans une manoeuvre de stationnement, en particulier dans une opération de stationnement dans un emplacement de stationnement (1), le procédé comportant les étapes suivantes :
(a) saisie de l'environnement du véhicule automobile (7) et vérification qu'un emplacement de stationnement (1) approprié y est présent,
(b) calcul d'une trajectoire (9; 13; 27; 29) que le véhicule automobile (7) peut parcourir pour se stationner dans l'emplacement de stationnement (1) en partant de la position actuelle du véhicule automobile (7),
**caractérisé par** l'étape suivante :
(c) affichage du premier segment de trajectoire (9; 13) à parcourir en fonction d'une direction, prédéterminée par le conducteur, de la première partie de la trajectoire.

2. Procédé selon la revendication 1, **caractérisé en ce qu'**en cas de modification de la direction prédéterminée par le conducteur pour le premier segment de trajectoire (9; 13), une nouvelle programmation de trajectoire est effectuée et le premier segment de trajectoire (9; 13) à parcourir est affiché au conducteur avec la direction modifiée.

3. Procédé selon les revendications 1 ou 2, **caractérisé en ce que** la direction prédéterminée par le conducteur du véhicule automobile (7) pour le premier segment de la trajectoire à parcourir est un segment en marche avant (9) ou un segment en marche arrière (13).

4. Procédé selon l'une des revendications 1 à 3, **caractérisé en ce que** la direction du premier segment de trajectoire (9; 13) à parcourir est prédéterminée par le conducteur du véhicule automobile (7) par engagement de la marche avant ou de la marche arrière.

5. Procédé selon l'une des revendications 1 à 4, **caractérisé en ce que** toutes les trajectoires (27; 29) nécessaires pour la manoeuvre de stationnement sont affichées au conducteur en fonction de la direction sélectionnée pour le premier segment de trajectoire (9; 13).

6. Procédé selon l'une des revendications 1 à 5, **caractérisé en ce que** les trajectoires (27; 29) nécessaires pour stationner dans l'emplacement de stationnement (1) sont calculées à la fois pour une manoeuvre de stationnement avec un segment de trajectoire (9) en marche avant comme premier segment de trajectoire et avec un segment de trajectoire (13) en marche arrière comme premier segment de trajectoire.

7. Procédé selon la revendication 6, **caractérisé en ce que** les trajectoires (27; 29) nécessaires pour la manoeuvre de stationnement avec un segment de trajectoire (9) en marche avant comme premier segment de trajectoire et un segment de trajectoire (13) en marche arrière comme premier segment de trajectoire sont présentées au conducteur du véhicule automobile.

8. Procédé selon l'une des revendications 1 à 7, **caractérisé en ce que** les objets (3, 5) détectés lors de la saisie de l'environnement sont présentés au conducteur du véhicule automobile (7).

9. Procédé selon l'une des revendications 1 à 8, **caractérisé en ce que** le premier segment de trajectoire est affiché au conducteur à la fois en termes de longueur de la distance à parcourir et comme direction de braquage éventuellement nécessaire.
